# EUROPÄISCHE PATENTANMELDUNG

(11) **EP 4 778 853 A1**
(43) Veröffentlichungstag der Anmeldung: **22.07.2026**
(21) Anmeldenummer: 26152220.5
(22) Anmeldetag: 16.01.2026
(51) Int. Cl.: B65D 83/76, G01F 11/02, B05B 11/02

(54) **PUMPSPENDER MIT EINER AN DER UNTERSEITE BEFESTIGBAREN PUMPVORRICHTUNG**

(30) Priorität: 21.01.2025 DE 202025100297 U; 03.06.2025 DE 102025121681
(71) Anmelder: Erlhöfer, Gerd, 58566 Kierspe (DE)
(72) Erfinder: Erlhöfer, Gerd, 58566 Kierspe (DE)
(74) Vertreter: Rieder & Partner mbB Patentanwälte - Rechtsanwalt

(57) **Zusammenfassung**

Die Erfindung betrifft einen Spender zur portionierten Ausgabe flüssiger bis pastöser Massen (M) mit einem Vorratsbehältnis (1) und einer oben am Vorratsbehältnis (1) angeordneten Ausgabeöffnung (2) zum Ausbringen der Masse (M), und mit einer Pumpvorrichtung (3), die mit einem innerhalb des Vorratsbehältnisses (1) angeordneten Kolben (4) zusammenwirkt, der bei einer Pumpbetätigung der Pumpvorrichtung (3) an einer Innenmantelfläche (5) des Vorratsbehältnisses (1) von unten nach oben verlagerbar ist, wobei ein die Pumpvorrichtung (3) und ein Reservoir (8) aufweisender Pumpenkörper (6) unterhalb des Kolbens (4) angeordnet ist. Es wird vorgeschlagen, dass die Pumpvorrichtung (3) eine Pumpe (6') umfasst, die eingerichtet ist, ein flüssiges Treibmittel (T) aus dem Reservoir (8) in ein Volumen (7) unterhalb des Kolbens (4) einzuspeisen. Alternativ wird vorgeschlagen, dass die Pumpvorrichtung (3) eine zwei Ventile aufweisende Pumpe (6') aufweist, mit der ein im Reservoir (8) bevorratetes flüssiges Treibmittel (T) aus dem Reservoir (8) gesogen und in ein zwischen einem Boden (22) des Vorratsbehältnisses (1) und dem Kolben (4) angeordnetes Volumen (7) eingepresst wird. Alternativ wird vorgeschlagen, dass die Pumpbetätigung durch einen in Vertikalrichtung erfolgenden Druck auf das Vorratsbehältnis (1) erfolgt, wobei ein zwischen Reservoir (8) und Kolben (4) angeordnetes Adapterteil (20) gegen die Kraft eines Federelements (36) in den Pumpenkörper (6) hineingeschoben wird.

## Beschreibung

### Gebiet der Technik

Die Erfindung betrifft einen Spender zur portionierten Ausgabe flüssiger bis pastöser Massen mit einem Vorratsbehältnis und einer oben am Vorratsbehältnis angeordneten Ausgabeöffnung zum Ausbringen der Masse, und mit einer Pumpvorrichtung, die mit einem innerhalb des Vorratsbehältnisses angeordneten Kolben zusammenwirkt, der bei einer Pumpbetätigung der Pumpvorrichtung an einer Innenmantelfläche des Vorratsbehältnisses von unten nach oben verlagerbar ist, wobei ein die Pumpvorrichtung und ein Reservoir aufweisender Pumpenkörper unterhalb des Kolbes angeordnet ist.

### Stand der Technik

Ein gattungsgemäßer Pumpspender ist aus der DE 20 2005 019 298 U1 bekannt. Diese offenbart einen Spender zur positionierten Ausgabe flüssiger bis pastöser Massen. Der Spender weist einen als Pumpenkopf ausgebildeten Ausgabekopf auf, der an einem oberen Abschnitt des Spenders teleskopierbar angeordnet ist. Die Pumpvorrichtung ist oben, im Wesentlichen innerhalb des Ausgabekopfes des Spenders angeordnet. Durch Vertikalverlagerung des Ausgabekopfes ist die Masse durch eine am Ausgabekopf angeordnete Ausgabeöffnung ausbringbar. Um die Ausgabeöffnung nach Gebrauch wieder zu verschließen, ist ein unverlierbar am Ausgabekopf gehaltertes Verschlussteil vorgesehen. Das Verschlussteil ist als linear verfahrbares Schiebeteil ausgebildet. Im Verschlusszustand des Schiebeteils tritt ein freies Ende eines innerhalb des Ausgabekopfes angeordneten Verschlusszapfens sichtend in eine Ausgabeöffnung des Schiebeteils ein.

Bei solchen aus dem Stand der Technik bekannten Pumpspendern mit einer oben am Vorratsbehältnis angeordneten Pumpvorrichtung können geringe Mengen Luft in das die zu spendende Masse beinhaltende Vorratsbehältnis des Spenders eindringen. Dadurch kann es zu einer Oxidation der Masse im Vorratsbehältnis kommen. Dies führt beispielsweise bei Vitamin C enthaltenden Cremes zu einer unerwünschten Verfärbung dieser.

### Zusammenfassung der Erfindung

Der Erfindung liegt die Aufgabe zugrunde, einen Pumpspender gebrauchsvorteilhaft weiterzubilden und insbesondere Mittel bereitzustellen, mit denen das Eindringen von Luft in ein eine zu spendende Masse lagerndes Vorratsbehältnis eines Pumpspenders unterbunden, zumindest aber gehemmt wird.

Die Aufgabe wird durch die in den Ansprüchen angegebene Vorrichtung gelöst. Die Unteransprüche stellen nicht nur vorteilhafte Weiterbildungen der in den nebengeordneten Ansprüchen angegebenen technischen Lehren dar, sondern sind auch eigenständige Lösungen der Aufgabe.

Die Pumpvorrichtung ist unten an dem Vorratsbehältnis des Pumpspenders angeordnet ist. Als unten wird hier das Ende des Vorratsbehältnisses angesehen, das dem Ende, an dem die Ausgabeöffnung zum Ausbringen der Masse angeordnet ist, entgegengesetzt ist.

Zunächst und im Wesentlichen wird vorgeschlagen, dass die Pumpvorrichtung eine Pumpe umfasst, die eingerichtet ist, ein flüssiges Treibmittel aus dem Reservoir in ein Volumen unterhalb des Kolbens einzuspritzen. Die Flüssigkeit kann den Kolben derart abdichten, dass ein Eindringen von Luft in das Vorratsbehältnis verhindert werden kann.

Gemäß einer weiteren Ausgestaltung der vorliegenden Erfindung kann vorgesehen sein, dass die Pumpvorrichtung eine zwei Ventile aufweisende Pumpe aufweist, mit der ein im Reservoir bevorratetes flüssiges Treibmittel aus dem Reservoir gesogen und in ein zwischen einem Boden des Vorratsbehältnisses und dem Kolben angeordnetes Volumen eingepresst wird. Mittels der beiden Ventile kann das in das Volumen eingepresste flüssige Treibmittel sicher in dem Volumen gehalten werden und ein weiteres Einpressen von flüssigem Treibmittel aus dem Reservoir sichergestellt werden. Ein Austreten von Treibmittel aus dem Volumen kann somit wirkungsvoll verhindert werden. Die Betriebssicherheit des Spenders kann somit insgesamt verbessert werden.

Gemäß einer weiteren Ausgestaltung der vorliegenden Erfindung kann vorgesehen sein, dass die Pumpbetätigung durch ein in Vertikalrichtung erfolgenden Druck auf das Vorratsbehältnis erfolgt, wobei ein zwischen Reservoir und Kolben angeordnetes Adapterteil gegen die Kraft eines Federelements in den Pumpenkörper hineingeschoben wird. Hierbei kann eine Teilmenge des Treibmittels in ein zwischen Kolben und Boden des Vorratsbehältnisses angeordnete Volumen gepresst werden, wodurch der Kolben von unten nach oben verlagert wird. Für eine Pumpbetätigung ist dann das Überwinden der Gegenkraft durch das Federelement notwendig. Eine unbeabsichtigte Pumpbetätigung des Spenders kann somit wirkungsvoll verhindert werden.

Die Ausgabeöffnung ist am oberen Ende des Pumpspenders angeordnet. Innerhalb des Vorratsbehältnisses kann ein Kolben angeordnet sein, der mit der Pumpvorrichtung zusammenwirkt. Bei einer Pumpbetätigung der Pumpvorrichtung wird der Kolben von unten nach oben verlagert, wobei der Kolben an einer Innenmantelfläche des Vorratsbehältnisses dichtend entlang gleitet. Der Kolben drückt hierbei die innerhalb des Vorratsbehältnisses lagernde Masse nach oben, wodurch eine Teilmenge der Masse aus der oben am Vorratsbehältnis angeordneten Ausgabeöffnung ausgebracht wird. Die Pumpvorrichtung kann unterhalb des Kolbens angeordnet sein. Der Kolben wird somit von unten druckbeaufschlagt. Es entsteht kein Sog. Es ist insbesondere vorgesehen, dass die Pumpvorrichtung lösbar an einem unteren Endabschnitt des Vorratsbehältnisses befestigt werden kann. Die Pumpvorrichtung kann derart lösbar an dem unteren Endabschnitt des Vorratsbehältnisses befestigt werden, dass die Pumpvorrichtung nach einer Trennung vom Spender bei Bedarf wiederverwendet werden kann. Beispielsweise kann die Pumpvorrichtung mittels einer Gewindeverbindung am unteren Endabschnitt des Vorratsbehältnisses befestigt werden. Beispielsweise kann der untere Endabschnitt ein Innengewinde ausbilden, in den ein von der Pumpvorrichtung ausgebildetes Außengewinde einschraubbar ist. Die Pumpvorrichtung kann zur Entnahme der zu spendenden Masse teleskopierbar an der Unterseite des Vorratsbehältnisses angeordnet sein.

Zwischen dem Boden des Vorratsbehältnisses und dem Kolben kann ein Volumen angeordnet sein, in den bei einer Pumpbetätigung der Pumpvorrichtung ein Treibmittel einspeisbar ist. Um das Treibmittel in das Volumen einzuspeisen, kann die Pumpvorrichtung eine Pumpe umfassen. Die Pumpe kann beispielsweise eine herkömmliche Druckpumpe sein. Als Treibmittel kann ein Gas, beispielsweise Luft oder eine Flüssigkeit fungieren. Es kann insbesondere Wasser als Treibmittel verwendet werden. Durch Einspeisen des Treibmittels in das Volumen wird ein Überdruck erzeugt, der den Kolben nach oben drückt.

An der Pumpe kann lösbar ein Reservoir befestigt werden, das ein Treibmittellagervolumen ausbildet, in dem das Treibmittel gelagert werden kann. Das Reservoir kann so zugänglich sein, dass ein Benutzer selbstständig das Reservoir mit Wasser befüllen kann. Das Treibmittellagervolumen kann eine Öffnung aufweisen, durch die das Treibmittel in das Treibmittellagervolumen eingespeist werden kann. Die Öffnung kann beispielsweise am unteren Ende des Treibmittellagervolumens, d.h. an dem von dem Vorratsbehältnis im befestigten Zustand abgewandten Ende angeordnet sein. Die Befüllungsöffnung kann wieder verschließbar sein, so dass ein Benutzer bei Bedarf das Treibmittellagervolumen befüllen kann. Das Treibmittellagervolumen kann gleich oder größer als das Volumen des Vorratsraumes sein.

Es kann ein Adapterteil vorgesehen sein, mit dem der Pumpenkörper teleskopierbar zusammenwirkt. Das Adapterteil kann lösbar, beispielsweise mit einer Schnapp- oder Rastverbindung an der Pumpe befestigt sein. Das Reservoir kann wiederum lösbar, beispielsweise mittels einer Schraubverbindung, am Adapterteil befestigt sein.

Der Kolben kann topfförmig ausgebildet sein, wobei ein Boden des topfförmigen Kolbenkörpers in im Vorratsbehältnis eingebauten Zustand nach oben und eine dem Boden gegenüberliegend angeordnete Öffnung des Kolbenkörpers nach unten weist. Der Kolbenkörper kann ein konstruktives Volumen einschließen, das nach oben durch den Boden begrenzt ist, seitlich durch eine Wandung des insbesondere zylinderförmigen Kolbens und nach unten durch ein nach unten ragendes freies Ende der Kolbenwandung. Der Körper des Kolbens weist eine dem Boden gegenüberliegende Öffnung auf. Die Öffnung weist eine Öffnungsfläche auf, die nach radial außen von dem nach unten weisenden Ende der Kolbenwandung begrenzt ist. Das nach unten weisende Ende der Kolbenwandung ist die untere Begrenzung des vom Kolben eingeschlossenen konstruktiven Volumens.

Die Wandung des Kolbenkörpers kann gasdicht an der Innenwandung der Vorratskammer des Vorratsbehältnisses anliegen. In einer Ausgangsstellung des Kolbens, die der Kolben vor einer erstmaligen Pumpbetätigung einnimmt, ragt ein vom Boden des Vorratsbehältnisses ausgebildeter Sockel in das vom Kolben eingeschlossene konstruktive Volumen hinein. In der Ausgangsstellung kann das nach unten weisende Ende der Wandung des Kolbenkörpers auf dem Boden des Vorratsbehältnisses aufliegen. In der unteren Verlagerungsposition wird noch kein Druck auf den Kolben ausgeübt, d.h. es ist noch kein Treibmittel in das Volumen zwischen dem Kolben und dem Boden des Vorratsbehältnisses eingespeist worden. Aufgrund des in das vom Kolben eingeschlossene konstruktive Volumen hineinragenden Sockels, ist ein von dem Körper des Kolbens eingeschlossenes zur Aufnahme des Treibmittels zur Verfügung stehendes freies Volumen kleiner als das vom Kolben eingeschlossene freie Volumen in einer oberen Verlagerungsposition des Kolbens, in der der Sockel nicht mehr oder nur noch teilweise in das konstruktive Volumen hineinragt. In der Ausgangsstellung kann eine nach oben weisende Stirnseite des Sockels vom Boden des Kolbens beabstandet sein. Der Sockel kann im Wesentlichen zylinderförmig sein, wobei der Sockel auch eine andere Form aufweisen kann. Die Querschnittsfläche des Sockels kann kleiner als die Querschnittsfläche des Vorratsbehältnisses sein, so dass eine Seitenwand des Sockels von der Innenwandung des Vorratsbehältnisses beabstandet angeordnet ist und zwischen dem Sockel und der Innenwandung des Vorratsbehältnisses eine sich koaxial um den Sockel erstreckende Vertiefung angeordnet ist. Diese Vertiefung kann nach unten durch den Boden des Vorratsbehältnisses begrenzt sein. In die Vertiefung kann die Wandung des Kolbens in der Ausgangsstellung zumindest abschnittsweise hineinragen. Die Wandung des Kolbens kann nach ein oder mehreren Pumpbetätigungen vollständig aus der Vertiefung in die obere Verlagerungsposition verlagert werden, in der der Sockel vollständig außerhalb des konstruktiven Volumens angeordnet ist.

In der nach oben weisenden Stirnseite des Sockels kann eine Einlassöffnung angeordnet sein, durch die das Treibmittel in das zwischen dem Kolben und dem Boden des Vorratsbehältnisses bzw. der Stirnseite des Sockels angeordnetes Volumen gepumpt werden kann. Der Sockel bildet eine zwischen der nach oben weisenden und der nach unten weisenden Stirnseite des Sockels eine Einsteckhöhlung aus, in die ein Endabschnitt des Pumpenkörpers einsteckbar ist. Der Endabschnitt des Pumpenkörpers kann beispielsweise mittels einer Schraubverbindung in der Einsteckhöhlung lösbar befestigt werden. In eingestecktem Zustand kann eine obere Auslassöffnung der Pumpe in die Einlassöffnung des Sockels münden, so dass das bei einer Pumpbetätigung durch eine von der Pumpe ausgebildeten Pumpkammer strömende Treibmittel in das Volumen zwischen Kolben und Boden des Vorratsbehältnisses einströmen kann. Die im Treibmittelvolumen gelagerte Flüssigkeitsmenge kann so gewählt sein, dass bei einem Pumpvorgang die Dichtfläche zwischen der Wandung des Kolbens und der Innenwandung der Vorratskammer durch die Flüssigkeit luftdicht abgeschlossen ist. Der Flüssigkeitsstand innerhalb der zwischen dem Sockel und der Innenwandung des Vorratsbehältnisses angeordneten Vertiefung nach einem Pumpvorgang kann dabei axial oberhalb der nach unten weisenden Stirnseite der Wandung des Kolbens angeordnet sein. Dadurch kann keine sich etwaig innerhalb des zwischen Kolben und Boden der Vorratskammer angeordneten Volumens befindliche Luft durch die Dichtfläche zwischen Kolbenwandung und Innenwandung der Vorratskammer in die Vorratskammer eindringen.

Der obere Endabschnitt der Pumpe kann durch eine in der nach unten weisenden Stirnseite des Sockels angeordnete Öffnung in die Einsteckhöhlung eingeführt werden. Die in der nach unten weisenden Stirnseite des Sockels angeordnete Öffnung kann größer sein als die in der nach oben weisenden Stirnseite des Sockels angeordnete Einlassöffnung. Der Kolben kann zentrisch um eine Spenderachse angeordnet sein. Die Erstreckungslänge des Kolbens kann bevorzugt größer sein als die Höhe des Sockels, so dass sich zwischen dem Kolben und dem Sockel bzw. Boden des Vorratsbehältnisses das Volumen ausbildet, in das das Treibmittel bei einem Pumpvorgang eingespeist werden kann, um den Kolben nach oben zu drücken.

Um die am oberen Ende des Pumpspenders angeordnete Ausgabeöffnung zu verschließen, kann ein Deckel vorgesehen sein. Der Deckel kann in einem unbenutzten Zustand des Pumpspenders an einem unteren Endabschnitt des Vorratsbehältnisses lösbar befestigt sein. Beispielsweise kann der Deckel ein Innengewinde ausbilden, auf das auf ein von dem unteren Endabschnitt des Vorratsbehältnisses ausgebildetes Außengewinde aufgeschraubt werden kann. Nach Anbruch des Pumpspenders kann der Deckel am oberen Endabschnitt des Vorratsbehältnisses lösbar befestigt werden, um die dort angeordnete Ausgabeöffnung zu verschließen. An dem oberen Endabschnitt des Vorratsbehältnisses kann ebenfalls ein Außengewinde angeordnet sein, auf das der Deckel aufgeschraubt werden kann. Der Deckel kann an einer zur oberen Stirnseite des Vorratsbehältnisses weisenden Innenseite des Deckelbodens einen Verschlusszapfen aufweisen, der im Verschlusszustand dichtend in die Ausgabeöffnung eintreten kann.

Das Vorratsbehältnis kann eine obere Öffnung aufweisen, die nach Befüllung der Vorratskammer mit der Masse mittels einer Deckelplatte gasdicht verschlossen werden kann. Die Deckelplatte kann beispielsweise mit dem Gehäuse des Vorratsbehältnisses mittels Ultraschall gasdicht verschweißt werden. Innerhalb der Deckelplatte kann die Ausgabeöffnung angeordnet sein. Die Ausgabeöffnung kann beispielsweise versiegelt sein, wobei die Versiegelung bei der ersten Verwendung durch einen Benutzer aufgebrochen werden kann.

Das Gehäuse des Vorratsbehältnisses kann beispielsweise aus Polyethylenterephthalat (PET) gefertigt sein. Das Vorratsbehältnis kann aber auch aus einem anderen Material, insbesondere aus einem anderen Kunststoff gefertigt sein. Das Adapterteil kann beispielsweise aus Polyethylen (PE) gefertigt sein. Die Deckelplatte kann insbesondere mittels Ultraschall mit dem aus PET gefertigten Vorratsbehältnis verschweißt sein. Der Deckel kann beispielsweise aus PET oder PE gefertigt sein. Die einzelnen Bauteile können aber auch aus einem anderen geeigneten Material gefertigt sein.

In einer weiter bevorzugten Ausführungsform ist insbesondere vorgesehen, dass die Pumpvorrichtung eine Auffangeinrichtung für aus dem Volumen austretendes Treibmittel aufweist. Die Auffangeinrichtung kann Bestandteil des Reservoirs sein oder durch das Reservoir ausgebildet sein. Im Falle einer Leckage im Bereich des Volumens kann ein Austreten des Treibmittels nach Außen verhindert werden, indem das Treibmittel durch die Auffangeinrichtung aufgefangen wird. Ein Kontakt des Anwenders mit dem Treibmittel kann beim Verwenden des Spenders auch im Falle einer Undichtigkeit oder Leckage im Bereich des Volumens wirkungsvoll verhindert werden.

Besonders bevorzugt ist die Auffangeinrichtung dazu ausgebildet, aus dem Volumen austretendes Treibmittel in das Treibmittellagervolumen zu leiten. Auf diese Weise kann das Treibmittel zurück in das Treibmittellagervolumen gelangen und weiter verwendet werden.

Vorzugsweise kann das Treibmittellagervolumen ein dem Vorratsbehältnis zugewandten Deckelabschnitt aufweisen. Der Deckelabschnitt begrenzt das Treibmittellagervolumen bevorzugt in vertikaler Richtung nach oben.

Zur Führung des Vorratsbehältnis in vertikaler Richtung bei einer Betätigung des Spenders kann die Pumpvorrichtung eine vertikale um eine Spenderachse umlaufende Führungswand aufweisen. Die Führungswand erstreckt sich vorzugsweise in vertikaler Richtung lediglich entlang eines Teilabschnitts des Vorratsbehältnisses, sodass ein der Pumpvorrichtung abgewandter Endbereich des Vorratsbehältnisses während einer Betätigung frei zugänglich ist und nicht von der Führungswand umgeben ist. Mittels der Führungswand kann eine besonders kostengünstige und zuverlässige Führung des Vorratsbehältnisses erzielt werden.

Der Deckelabschnitt kann in einem von der umlaufenden Führungswand umgebenden Bereich wenigstens eine Durchgangsöffnung aufweisen, durch welche aus dem Volumen austretendes Treibmittel in das Treibmittellagervolumen gelangt. Die Auffangeinrichtung kann somit durch die Durchgangsöffnung gebildet sein. Aus dem Volumen austretendes flüssiges Treibmittel kann aufgrund der Schwerkraft durch die Durchgangsöffnung in das Treibmittellagervolumen gelangen. Aufgrund der umlaufenden Führungswand kann ein Austreten des Treibmittels nach Außen zuverlässig verhindert werden, sodass während der Verwendung vorzugsweise kein Treibmittel aus dem Spender Austreten kann.

Gemäß einer weiteren Ausgestaltung der vorliegenden Erfindung kann vorgesehen sein, dass das Reservoir ein Treibmittellagervolumen ausbildet, in dem das insbesondere flüssige Treibmittel gelagert werden kann, und dass die Pumpvorrichtung, insbesondere das Reservoir, eine Auffangeinrichtung für aus dem Volumen austretendes Treibmittel aufweist.

Ein derartiger erfindungsgemäßer Pumpspender ist für Massen unterschiedlicher Viskosität geeignet. Dies kann bis hin zu einer wasserähnlichen Flüssigkeit gehen, aber auch eine sehr hochviskose zähe Masse sein.

### Kurze Beschreibung der Zeichnungen

Ausführungsbeispiele der Erfindung werden nachfolgend anhand beigefügter Zeichnungen erläutert. Es zeigen:
- Fig. 1: eine Schnittdarstellung des erfindungsgemäßen Pumpspenders mit einer unterhalb eines Kolbens 4 zum Ausbringen einer in einem Vorratsbehältnis 1 gelagerten Masse M angeordneten, an dem Vorratsbehältnis 1 lösbar befestigten Pumpvorrichtung 3, wobei an der Pumpvorrichtung 3 ein ein Treibmittel T bereitstellendes Reservoir 8 lösbar befestigt ist, wobei an einem oberen Endabschnitt des Vorratsbehältnisses ein Deckel 17 aufgeschraubt ist,
- Fig. 2: ausschnittsweise einen unteren Endabschnitt des Vorratsbehältnisses 1 des Pumpspenders mit dem Kolben 4 in einer Ausgangsstellung vor einer ersten Pumpbetätigung der Pumpvorrichtung,
- Fig. 3: eine Schnittdarstellung gemäß Figur 2, wobei der Kolben 4 durch Pumpbetätigung der Pumpvorrichtung 3 von dem nach oben gepumpten Treibmittel T nach oben in eine Verlagerungsposition gedrückt wurde,
- Fig. 4: eine Schnittdarstellung des Vorratsbehältnisses 1 mit dem am unteren Endabschnitt lösbar befestigten Deckel 17, wobei die am oberen Endabschnitt angeordnete Ausgabeöffnung 2 mittels eines bei einer ersten Verwendung des Pumpspenders aufzubrechenden Siegelverschlusses 25 verschlossen ist,
- Fig. 4a: eine Draufsicht in Richtung IVa in Figur 4 auf die mit dem Siegelverschluss 25 verschlossene Ausgabeöffnung 2 an der Stirnseite des oberen Endabschnittes des Vorratsbehältnisses 1,
- Fig. 5: eine Schnittdarstellung des Vorratsbehältnisses 1 gemäß Figur 4, wobei der Deckel 17 abgeschraubt ist und der Siegelverschluss 25 entfernt wurde,
- Fig. 6: eine Schnittdarstellung der Pumpvorrichtung 3 mit lösbar an der Pumpe 6 befestigtem Reservoir 8,
- Fig. 7: eine vergrößerte Darstellung des Ausschnitts VII in Figur 6,
- Fig. 8: einen Schnitt entlang der Linie VIII-VIII in Figur 6,
- Fig. 9: eine Schnittdarstellung des erfindungsgemäßen Pumpspenders gemäß einer weiteren Ausführungsform mit einer unterhalb eines Kolbens 4 zum Ausbringen einer in einem Vorratsbehältnis 1 gelagerten Masse M angeordneten, an dem Vorratsbehältnis 1 lösbar befestigten Pumpvorrichtung 3, wobei an der Pumpvorrichtung 3 ein ein Treibmittel T bereitstellendes Reservoir 8 lösbar befestigt ist, wobei an einem oberen Endabschnitt des Vorratsbehältnisses ein Deckel 17 aufgeschraubt ist,
- Fig. 10: eine Detailansicht der Schnittdarstellung des Pumpspenders entlang der Linien X in Fig. 9.
- Fig. 11: einen Schnitt entlang der Linie XI-XI in Fig. 10 .

### Beschreibung der Ausführungsformen

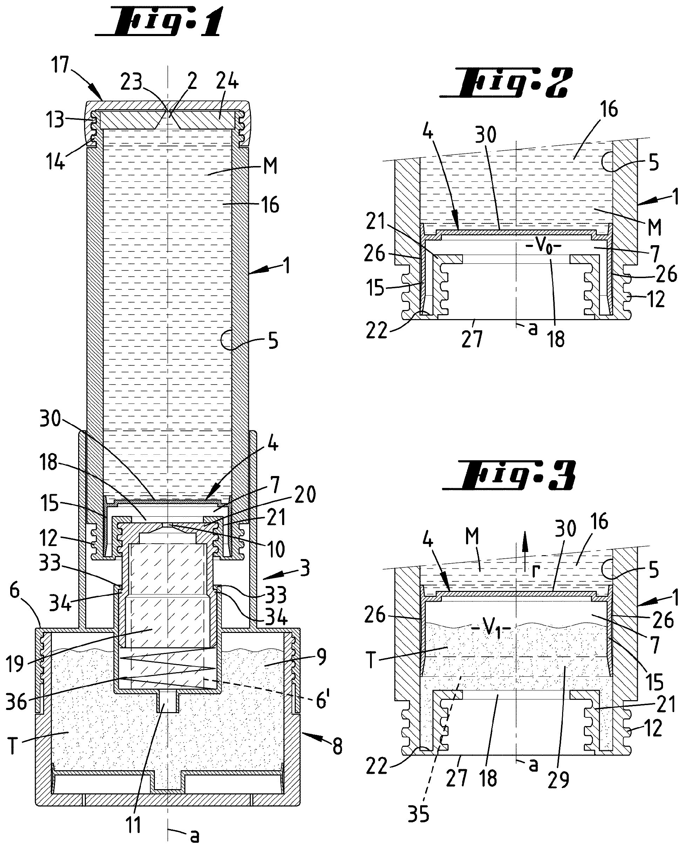

Die Figur 1 zeigt eine schematische Schnittdarstellung des erfindungsgemäßen Pumpspenders. Der Pumpspender umfasst ein einen Vorratsraum 16 ausbildendes Vorratsbehältnis 1, in dem ein zentrisch um eine Spenderachse a angeordneter Kolben 4 angeordnet ist. Innerhalb des Vorratsraumes 16 lagert eine zu spendende Masse M, die bei Pumpbetätigung mittels des Kolbens 4 aus einer an einem oberen Endabschnitt des Pumpspenders angeordneten Ausgabeöffnung 2 ausgebracht werden kann. Der bei Pumpbetätigung an der Innenmantelfläche 5 des Vorratsraumes 16 von unten nach oben entlanggleitende Kolben 4 wirkt mit einer an einem unteren Endabschnitt des Vorratsbehältnisses 1 lösbar befestigten Pumpvorrichtung 3 zusammen. Die Pumpvorrichtung 3 umfasst ein Adapterteil 20 und einen Pumpenkörper 6, die teleskopartig miteinander verbunden sind. Innerhalb des Pumpenkörpers 6 ist eine Pumpe 6' angeordnet, die hier nur gestrichelt dargestellt ist. Bei der Pumpe 6' handelt es sich insbesondere um eine herkömmliche Druckpumpe. Auf die Darstellung von konstruktiven Details wurde daher vorliegend verzichtet. Es ist vorgesehen, dass zur Entnahme der zu spendenden Masse M der Pumpenkörper 6 bei einer Pumpbetätigung mit dem an einem unteren Endabschnitt des Vorratsbehältnisses 1 lösbar befestigten Adapterteil 20 teleskopartig zusammenwirkt. Das Adapterteil 20 bildet an einem dem Vorratsbehältnis 1 in verbundenem Zustand zugewandten Ende ein Außengewinde aus, das in ein von dem unteren Endabschnitt des Vorratsbehältnisses 1 ausgebildetes Innengewinde eingeschraubt ist. Der Boden 22 des Vorratsbehältnisses 1 bildet einen nach oben in die Vorratskammer 16 hineinragenden Sockel 21 aus. Der Sockel 21 bildet eine sich zwischen einer oberen Öffnung 18 und einer unteren Öffnung 27 erstreckende Einsteckhöhlung 28 aus, in der der obere Endabschnitt des Adapterteils 20 lösbar befestigt werden kann. Das Adapterteil 20 verlängert eine von dem Pumpenkörper 6 ausgebildete Pumpkammer 19, durch die bei Pumpbetätigung ein Treibmittel T in ein zwischen dem Kolben 4 und dem Boden 22 der Vorratskammer 16 angeordnetes Volumen 7 einspeisbar ist. Hierzu kann die Pumpe 6' an ihrer Unterseite eine Eintrittsöffnung 11 für Treibmittel T aufweisen. Die Eintrittsöffnung 11 kann in das Vorratsvolumen 9 und insbesondere das dort bevorratete Treibmittel T hineinreichen. Die Eintrittsöffnung 11 kann durch einen rohrartigen nach unten vorstehenden Abschnitt der Pumpe 6' ausgebildet sein. Das von einem lösbar an der Pumpvorrichtung 3 befestigten Reservoir 8 bereitgestellte Treibmittel T wird bei einer Pumpbetätigung durch die Pumpkammer 19 nach oben durch eine am oberen Ende des Adapterteils 20 angeordnete Einspeiseöffnung 10 in das Volumen 7 eingespeist. Das in das Volumen 7 eingespeiste Treibmittel T übt einen Druck in Vertikalrichtung nach oben auf den Kolben 4 aus, so dass dieser von unten nach oben verlagert wird, wodurch zumindest eine Teilmenge der Masse M aus der Ausgabeöffnung 2 ausgebracht wird.

Die Pumpvorrichtung 3 kann ein Reservoir 8 für das Treibmittel T aufweisen oder ausbilden. Die Pumpvorrichtung 3, insbesondere das Reservoir 8, kann ein Treibmittellagervolumen 9 für das Treibmittel T aufweisen und/oder ausbilden. Die Pumpe 6' und/oder die Pumpkammer 19 kann zumindest abschnittsweise innerhalb des Treibmittellagervolumens 9 angeordnet sein.

Die Pumpvorrichtung 3 kann eine vertikale um die Spenderachse a umlaufende Führungswand 38 zur vertikalen Führung des Vorratsbehältnisses 1 aufweisen. Die Führungswand 38 dient zur vertikalen Führung des Vorratsbehältnisses 1. Durch den vertikal nach unten gerichteten händischen Druck auf das Vorratsbehältnis 1 wird dieses innerhalb der Führungswand 38 nach unten gedrückt.

Das Treibmittellagervolumen 9 kann einen dem Vorratsbehältnis 1 zugewandten Deckelabschnitt 39 aufweist. Der Deckelabschnitt 39 kann das Treibmittellagervolumen 9 in vertikaler Richtung nach oben in Richtung zum Vorratsbehältnis 1 abschließen.

Die Pumpbetätigung kann durch Druck auf das Vorratsbehältnis 1 in Vertikalrichtung nach unten erfolgen. Die Pumpvorrichtung 3 kann hierbei auf einer bevorzugt ebenen Fläche abgestellt sein. Durch den vertikal nach unten gerichteten händischen Druck auf das Vorratsbehältnis 1 wird dieses nach unten auf das Adapterteil 20 gedrückt, wodurch dieses teleskopartig gegen die Kraft eines Federelementes 36 in den Pumpenkörper 6 hineingeschoben wird. Hierbei wird eine Teilmenge des Treibmittels T aus der Pumpenkammer 19 in das zwischen Kolben 4 und Boden 22 des Vorratsbehältnisses 1 angeordnete Volumen 7 gepresst, wodurch der Kolben 4 von unten nach oben verlagert wird. Beim anschließenden Hochziehen des Vorratsbehältnisses 1 wird das Adapterteil 20 und damit das Vorratsbehältnis 1 durch die Kraft des Federelementes 36 nach oben verlagert und eine Teilmenge des Treibmittels T aus dem Treibmittellagervolumen 9 in die Pumpe 6' gesogen. Nicht dargestellt sind an einem oberen und einem unteren Ende der Pumpe 6' angeordnete Ventile, wobei das obere Ventil beim Herunterdrücken des Vorratsbehältnisses 1 beziehungsweise des Adapterteils 20 öffnet und das untere Ventil schließt, wobei beim anschließenden Hochziehen des Vorratsbehältnisses 1 das obere Ventil geschlossen und das untere Ventil geöffnet ist, um ein Eindringen des Treibmittels T in die Pumpe 6' zu ermöglichen.

An einem oberen Endabschnitt des Vorratsbehältnisses 1 ist lösbar ein Deckel 17 befestigt. Der Deckel 17 bildet ein Innengewinde 13 aus, das auf ein von dem oberen Endabschnitt des Vorratsbehältnisses 1 ausgebildetes Außengewinde 14 aufgeschraubt ist. Am Boden des Deckels 17 ist eine Verschlussnase 23 angeordnet, die in aufgeschraubtem Zustand in die Ausgabeöffnung 2 hineinragt und diese gasdicht verschließt. Die Ausgabeöffnung 2 ist innerhalb einer mittels Ultraschall mit dem Gehäuse des Vorratsbehältnisses 1 gasdicht verschweißten Verschlussplatte 24 angeordnet. Die Ausgabeöffnung 2 ist bevorzugt im Zentrum der scheibenförmigen Platte 24 angeordnet. Der Deckel 17 kann nach einer Benutzung des Pumpspenders auf das obere Ende des Vorratsbehältnisses 1 aufgeschraubt werden, um die Ausgabeöffnung 2 zu verschließen.

Die Figur 2 zeigt den Kolben 7 in einer Ausgangsstellung vor einer ersten Pumpbetätigung. Der Kolben 7 ist topfförmig ausgebildet mit einem nach oben weisenden Boden 30 und einer nach unten weisenden Topföffnung 29, wobei eine die nach unten weisende Topföffnung 29 umgebende Randfläche der Kolbenwandung 15 auf dem Boden 22 der Vorratskammer 16 aufliegt. Der Kolben 7 schließt in seiner Ausgangsstellung das freie Volumen V₀ ein, das nach oben durch den Boden 30 des Kolbens 4, seitlich durch die Kolbenwandung 15 und nach unten durch den Boden 22 der Vorratskammer 6 und die Stirnfläche des Sockels 22 begrenzt wird.

Die Figur 3 zeigt den Kolben 7 in einer oberen Verlagerungsposition nach einer oder mehreren Pumpbetätigungen, wobei eine Teilmenge des vom Reservoir 8 bereitgestellten Treibmittels T in das Volumen 7 eingespeist wurde. Der Kolben 4 schließt in der Verlagerungsposition ein freies Volumen V₁ ein, das zur Aufnahme des Treibmittels T zur Verfügung steht. Das vom Kolben 4 in der oberen Verlagerungsposition eingeschlossene freie Volumen V₁ ist größer als das vom Kolben 4 eingeschlossene freie Volumen V₀ in der in Figur 2 dargestellten Ausgangsstellung des Kolbens 4. Ursächlich für diesen Volumenunterschied ist der vom Boden der Vorratskammer 6 des Vorratsbehältnisses 1 ausgebildete Sockel 21, der in der Ausgangsstellung des Kolbens 4 in das vom Kolben eingeschlossene konstruktive Volumen hineinragt. Das konstruktive Volumen entspricht dem in Figur 3 vom Kolben 4 eingeschlossenem freien Volumen V₁, das nach oben durch den Boden des Kolbens 4 und seitlich durch die Kolbenwandung 15 begrenzt wird. Gestrichelt dargestellt ist die untere Grenze 35 des freien Volumens V₁, das hier beispielhaft auch dem konstruktiven Volumen entspricht, wobei die untere Grenze 35 innerhalb einer von der nach unten weisenden Öffnung 29 des Sockels 21 eingeschlossenen Horizontalfläche liegt. Die untere Grenze 35 des konstruktiven Volumens wird durch das untere Ende des Kolbens 4 bzw. der Kolbenwandung 15 gebildet.

Die Pumpe 6' kann in den Sockel 21 eingeschraubt sein oder werden. Der Sockel 21 kann hierzu ein Innengewinde und die Pumpe' ein korrespondierendes Außengewinde aufweisen.

Der Quotient des freien Volumens V₀ in der Ausgangsstellung und des Volumens V₁ in der oberen Verlagerungsstellung (V₀/V₁) des Kolbens 4 ist erfindungsgemäß kleiner 1. Der Volumenquotient V₀/V₁ ist derart gewählt, dass das Treibmittel T nach einer ersten Pumpbetätigung eine zwischen der Kolbenwandung 15 und der Innenmantelfläche 5 der Vorratskammer 6 angeordnete Dichtfläche 26 gasdicht abdichtet, so dass etwaig vor der ersten Pumpbetätigung innerhalb des Volumens 7 vorhandene Luft nicht durch die Dichtfläche 26 hindurch in die Vorratskammer 6 gepumpt wird. Bei dem Treibmittel T kann es sich um eine Flüssigkeit, beispielsweise Wasser handeln. Der Flüssigkeitsstand nach dem ersten Pumpvorgang liegt vertikal oberhalb des nach unten weisenden Endabschnitts der Kolbenwandung 15. Der Volumenquotient V₀/V₁ ist derartig eingestellt, dass der die nach unten weisende Topföffnung 29 nach radial außen begrenzende Rand der Kolbenwandung 15 in der oberen Verlagerungsposition des Kolbens 4 vom Treibmittel T bedeckt ist.

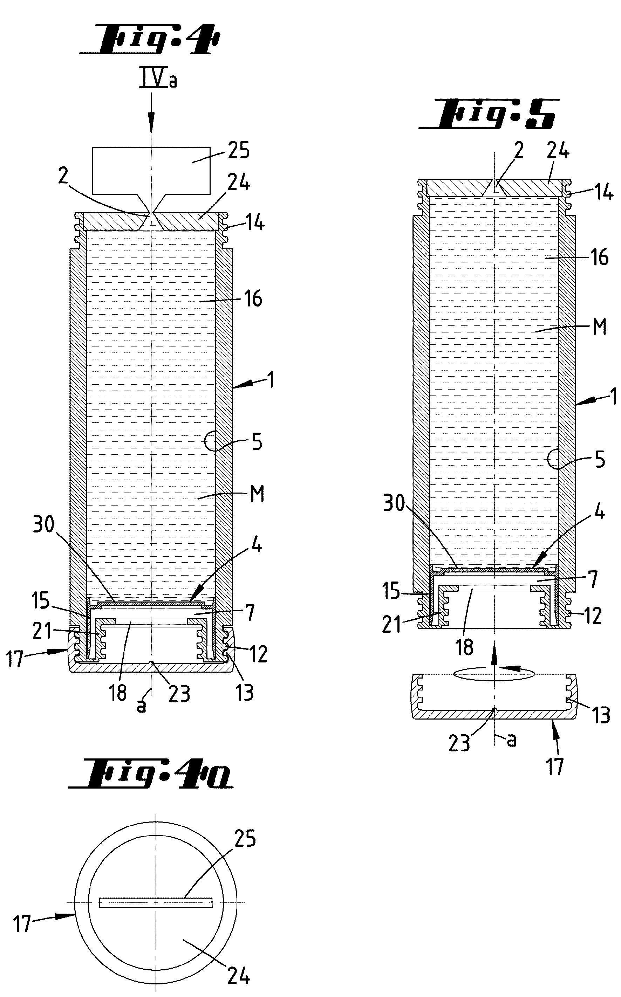

Die Figur 4 zeigt das Vorratsbehältnis 1 mit am unteren Endabschnitt des Vorratsbehältnisses 1 aufgeschraubtem Deckel 17. Der untere Endabschnitt des Vorratsbehältnisses 1 bildet wie auch der obere Endabschnitt ein Befestigungsmittel zur lösbaren Befestigung des Deckels 17 aus. Das Befestigungsmittel ist hier beispielhaft ein von dem unteren Endabschnitt des Vorratsbehältnisses 1 ausgebildetes Außengewinde 12. Um die Ausgabeöffnung 2 bis zu einer erstmaligen Verwendung des Pumpspenders gasdicht zu versiegeln, ist ein Siegelverschluss 25 vorgesehen, der beispielhaft in den Figuren 4 und 4a dargestellt ist. Der Siegelverschluss 25 kann händisch durch einen Benutzer des Pumpspenders vor einer erstmaligen Verwendung aufgebrochen werden. Der Siegelverschluss 25 kann materialeinheitlich mit der Verschlussplatte 24 sein. Der Siegelverschluss 25 ist nach Aufbruch nicht wiederverwendbar. In den Figuren 4 und 4a ist der Siegelverschluss 25 als länglicher schlüsselartiger Flachkörper dargestellt. Der Siegelverschluss 25 kann aber auch andersartig ausgebildet sein, beispielsweise als abziehbarer folienartiger Verschluss.

Die Figur 5 zeigt das Vorratsbehältnis 1 ohne den Deckel 17. Der Deckel 17 kann auch mittels einer anderen lösbaren Verbindung als einer Schraubverbindung, beispielsweise einer Rastverbindung an den Endabschnitten des Vorratsbehältnisses 1 befestigt sein.

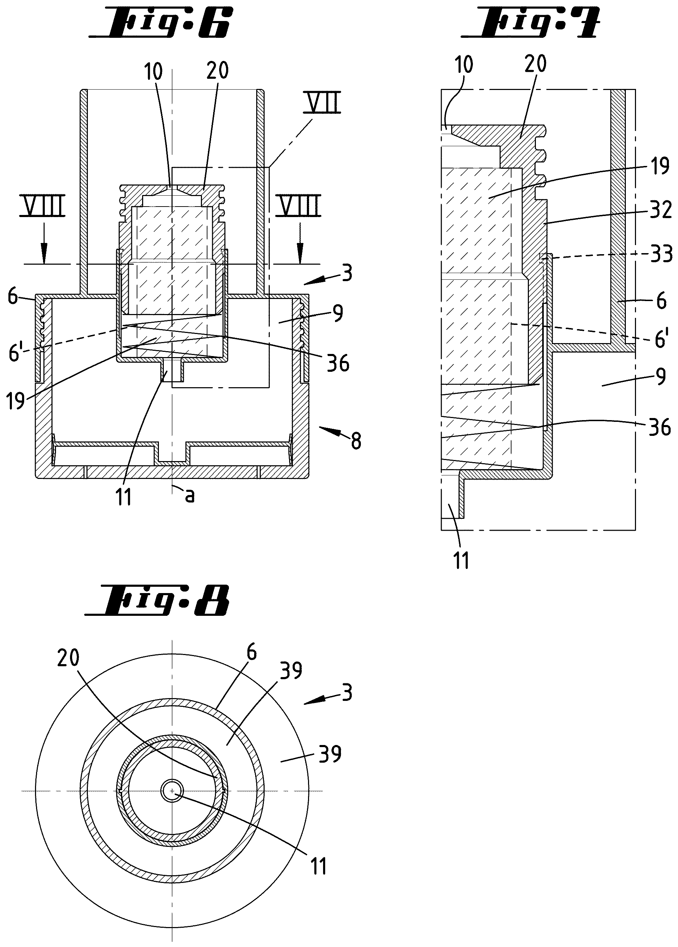

In den Figuren 6 und 7 ist die Pumpvorrichtung 3 mit daran lösbar befestigtem Reservoir 8 dargestellt. Das Adapterteil 20 steckt in der Pumpkammer 19 des Pumpenkörpers 6 ein. Die Außenwand des zylinderförmigen Adapterteils 20 bildet radial abragende Vorsprünge 32 aus, die in von der Innenwandung der Pumpenkammer 19 ausgebildete Längsnuten 31 eingreifen und ein Verdrehen oder Verrutschen des Adapterteils 20 gegenüber dem Pumpenkörper 6 in Horizontalrichtung verhindern (s. Figur 8). Um den Verlagerungsweg des Adapterteils 20 in Vertikalrichtung nach oben zu begrenzen, sind zumindest zwei von dem Pumpenkörper 6 ausgebildete Rastnasen 33 vorgesehen, die in einer maximalen Ausfuhrstellung des Adapterteils 20 auf einer von der Außenwandung des Adapterteils 20 ausgebildeten Rastschulter 34 aufliegen (s. Figur 1).

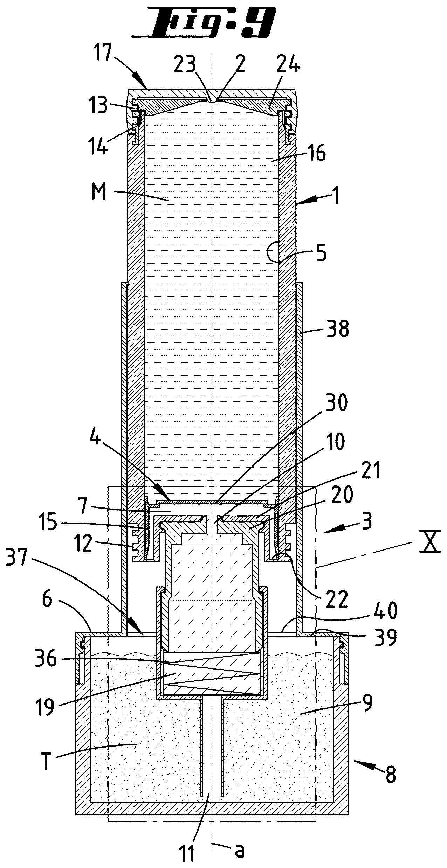

In den Figuren 9 bis 11 ist ein Spender, insbesondere Pumpspender, gemäß einer weiteren Ausführungsform gezeigt. Der Pumpspender gemäß der weiteren Ausführungsform unterscheidet sich gegenüber der in Fig. 1 bis Fig. 8 gezeigten ersten Ausführungsform unter anderem dadurch, dass die Pumpe 6' mittels eines Bajonettverschlusses mit dem Sockel 21 verbunden ist. Mittels der Bajonettverbindung kann eine besonders einfache und zuverlässige Verbindung geschaffen werden. Auf diese Weise erhält der Anwender beim Verbinden der Pumpe 6' mit dem Sockel 21 eine haptische Rückmeldung beim Einrasten der Bajonettverbindung. Der Anwender kann somit in einfacher haptischer Weise sicherstellen, dass die Verbindung zweckmäßig ausgebildet ist.

Weiterhin kann die Pumpvorrichtung 3, insbesondere das Reservoir 8, eine Auffangeinrichtung 37 für aus dem Volumen 7 austretendes Treibmittel T aufweisen, wie in Fig. 9 bis 11 gezeigt ist. Die Auffangeinrichtung 37 ist vorzugsweise dazu ausgebildet, aus dem Volumen 7 austretendes Treibmittel T in das Treibmittellagervolumen 9 zu leiten. Kommt es zu einer Leckage im Volumen 7 kann das austretende Treibmittel T von der Auffangeinrichtung 37 aufgefangen und in das Treibmittellagervolumen 9 eingeleitet werden, wodurch ein Austreten des Treibmittel T aus dem Spender verhindert werden kann.

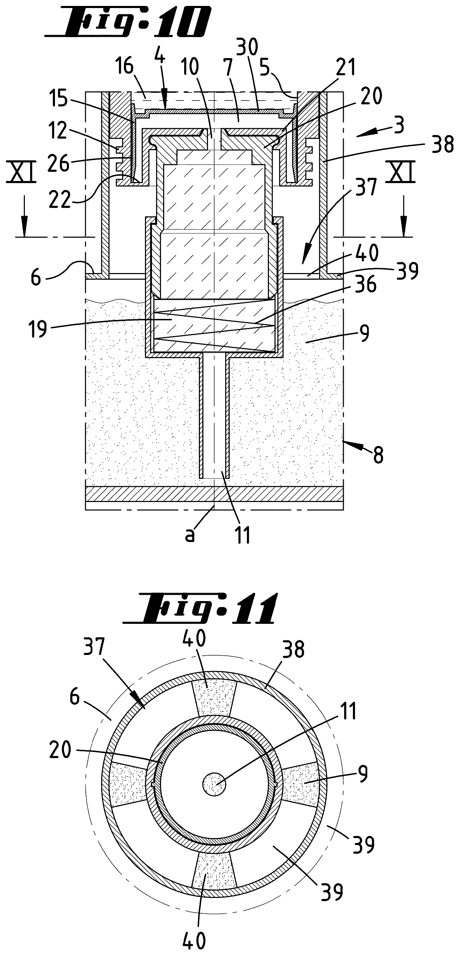

Wie aus der Zusammenschau der Fig. 10 und Fig. 11 ersichtlich, kann der Deckelabschnitt 39 in einem von der umlaufenden Führungswand 38 umgebenden Bereich wenigstens eine Durchgangsöffnung 40 aufweisen, durch welche aus dem Volumen 7 austretendes Treibmittel T in das Treibmittellagervolumen 9 gelangt. Die Auffangeinrichtung 37 kann somit die Durchgangsöffnung 40 aufweisen oder durch die Durchgangsöffnung 40 gebildet sein.

Wie Fig. 11 zeigt, kann der Deckelabschnitt 39 mehrere Durchgangsöffnungen 40 aufweisen, insbesondere genau vier Durchgangsöffnungen 40. Die Durchgangsöffnungen 40 können in Umfangsrichtung bezogen auf die Spenderachse a gleichverteilt und/ oder gleichmäßig voneinander beabstandet sein. Kommt es zu einer Leckage im Bereich des Volumens 7 kann austretendes, insbesondere flüssiges, Treibmittel T aufgrund der Schwerkraft in den Bereich des Deckelabschnitts 39 gelangen und über die Durchgangsöffnung 40 in das Treibmittelvolumen 9 geführt werden. Hierzu kann der Deckelabschnitt 39 zu den Durchgangsöffnungen 40 hin abgeschrägt sein, insbesondere derart, dass auf den Deckelabschnitt 39 befindliches flüssiges Treibmittel T aufgrund der Schwerkraft zu den Durchgangsöffnungen 40 gelangt. Hierzu kann der Deckelabschnitt 39 eine zu den Durchgangsöffnungen 40 gebildete Schräge von wenigstens 1 °, bevorzugt von 2° oder wenigstens 2 ° aufweisen.

### Liste der Bezugszeichen

| | | | |
|---|---|---|---|
| 1 | Vorratsbehältnis | 26 | Dichtfläche |
| 2 | Ausgabeöffnung | 27 | untere Öffnung |
| 3 | Pumpvorrichtung | 28 | Einsteckhöhlung |
| 4 | Kolben | 29 | Topföffnung |
| 5 | Innenmantelfläche | 30 | Boden Kolben |
| 6 | Pumpenkörper | 31 | Längsnut |
| 6' | Pumpe | 32 | Vorsprung |
| 7 | Volumen | 33 | Rastnase |
| 8 | Reservoir | 34 | Rastschulter |
| 9 | Treibmittellagervolumen | 35 | unteres Ende der Kolbenwandung |
| 10 | Einspeiseöffnung | | |
| 11 | Eintrittsöffnung | 36 | Federelement |
| 12 | unteres Außengewinde | 37 | Auffangeinrichtung |
| 13 | Innengewinde | 38 | Führungswand |
| 14 | oberes Außengewinde | 39 | Deckelabschnitt |
| 15 | Kolbenwandung | 40 | Durchgangsöffnung |
| 16 | Vorratsraum | | |
| 17 | Deckel | M | Masse |
| 18 | Obere Öffnung | T | Treibmittel |
| 19 | Pumpenkammer | a | Spenderachse |
| 20 | Adapterteil | V₀ | freies Volumen |
| 21 | Sockel | V₁ | freies Volumen |
| 22 | Boden | | |
| 23 | Verschlussnase | | |
| 24 | Verschlussplatte | | |
| 25 | Siegelverschluss | | |

## Patentansprüche

1. Spender zur portionierten Ausgabe flüssiger bis pastöser Massen (M) mit einem Vorratsbehältnis (1) und einer oben am Vorratsbehältnis (1) angeordneten Ausgabeöffnung (2) zum Ausbringen der Masse (M),
und mit einer Pumpvorrichtung (3), die mit einem innerhalb des Vorratsbehältnisses (1) angeordneten Kolben (4) zusammenwirkt, der bei einer Pumpbetätigung der Pumpvorrichtung (3) an einer Innenmantelfläche (5) des Vorratsbehältnisses (1) von unten nach oben verlagerbar ist, wobei ein die Pumpvorrichtung (3) und ein Reservoir (8) aufweisender Pumpenkörper (6) unterhalb des Kolbens (4) angeordnet ist, **dadurch gekennzeichnet, dass** die Pumpvorrichtung (3) eine Pumpe (6') umfasst, die eingerichtet ist, ein flüssiges Treibmittel (T) aus dem Reservoir (8) in ein Volumen (7) unterhalb des Kolbens (4) einzuspeisen.

2. Spender zur portionierten Ausgabe flüssiger bis pastöser Massen (M) mit einem Vorratsbehältnis (1) und einer oben am Vorratsbehältnis (1) angeordneten Ausgabeöffnung (2) zum Ausbringen der Masse (M),
und mit einer Pumpvorrichtung (3), die mit einem innerhalb des Vorratsbehältnisses (1) angeordneten Kolben (4) zusammenwirkt, der bei einer Pumpbetätigung der Pumpvorrichtung (3) an einer Innenmantelfläche (5) des Vorratsbehältnisses (1) von unten nach oben verlagerbar ist, wobei ein die Pumpvorrichtung (3) und ein Reservoir (8) aufweisender Pumpenkörper (6) unterhalb des Kolbens (4) angeordnet ist, **dadurch gekennzeichnet, dass** die Pumpvorrichtung (3) eine zwei Ventile aufweisende Pumpe (6') aufweist, mit der ein im Reservoir (8) bevorratetes flüssiges Treibmittel (T) aus dem Reservoir (8) gesogen und in ein zwischen einem Boden (22) des Vorratsbehältnisses (1) und dem Kolben (4) angeordnetes Volumen (7) eingepresst wird.

3. Spender zur portionierten Ausgabe flüssiger bis pastöser Massen (M) mit einem Vorratsbehältnis (1) und einer oben am Vorratsbehältnis (1) angeordneten Ausgabeöffnung (2) zum Ausbringen der Masse (M),
und mit einer Pumpvorrichtung (3), die mit einem innerhalb des Vorratsbehältnisses (1) angeordneten Kolben (4) zusammenwirkt, der bei einer Pumpbetätigung der Pumpvorrichtung (3) an einer Innenmantelfläche (5) des Vorratsbehältnisses (1) von unten nach oben verlagerbar ist, wobei ein die Pumpvorrichtung (3) und ein Reservoir (8) aufweisender Pumpenkörper (6) unterhalb des Kolbens (4) angeordnet ist, **dadurch gekennzeichnet, dass** die Pumpbetätigung durch einen in Vertikalrichtung erfolgenden Druck auf das Vorratsbehältnis (1) erfolgt, wobei ein zwischen Reservoir (8) und Kolben (4) angeordnetes Adapterteil (20) gegen die Kraft eines Federelements (36) in den Pumpenkörper (6) hineingeschoben wird.

4. Spender nach einem der vorhergehenden Ansprüche, **dadurch gekennzeichnet, dass** die Pumpvorrichtung (3) lösbar an einem unteren Endabschnitt des Vorratsbehältnisses (1) befestigt ist, insbesondere mittels einer Schraubverbindung oder einer Bajonettverbindung.

5. Spender nach einem der vorhergehenden Ansprüche, **dadurch gekennzeichnet, dass** die Pumpvorrichtung (3) eine Pumpe (6') umfasst, die eingerichtet ist, ein, insbesondere flüssiges, Treibmittel (T) in ein Volumen (7) unterhalb des Kolbens (4) einzuspeisen.

6. Spender nach einem der vorhergehenden Ansprüche, **dadurch gekennzeichnet, dass** das Reservoir (8) lösbar an der Pumpvorrichtung (3) befestigt ist, wobei das Reservoir (8) ein Treibmittellagervolumen (9) ausbildet, in dem das insbesondere flüssige Treibmittel (T) gelagert werden kann.

7. Spender nach einem der vorhergehenden Ansprüche, **dadurch gekennzeichnet, dass** das Treibmittellagervolumens (9) größer als das Volumen des Vorratsbehältnisses (1) ist.

8. Spender nach einem der vorhergehenden Ansprüche, **dadurch gekennzeichnet, dass** das Reservoir (8) zum Einspeisen des Treibmittels (T) öffenbar ist, und insbesondere lösbar an der Pumpvorrichtung (3) befestigt ist.

9. Spender nach einem der vorhergehenden Ansprüche, **dadurch gekennzeichnet, dass** ein von einem unteren Abschnitt des Kolbens (4) eingeschlossenes zur Aufnahme des Treibmittels (T) zur Verfügung stehendes freies Volumen (V₀, V₁) in einer Ausgangsstellung, in der der Kolben (4) vor einer ersten Pumpbetätigung lagert, kleiner ist als in einer oberen Verlagerungsposition des Kolbens (4), in die der Kolben (4) nach einer Pumpbetätigung verlagert ist.

10. Spender nach einem der vorhergehenden Ansprüche, **dadurch gekennzeichnet, dass** die Pumpvorrichtung (3), insbesondere das Reservoir (8), eine Auffangeinrichtung (37) für aus dem Volumen (7) austretendes Treibmittel (T) aufweist.

11. Spender nach Anspruch 10, **dadurch gekennzeichnet, dass** die Auffangeinrichtung (37) dazu ausgebildet ist, aus dem Volumen (7) austretendes Treibmittel (T) in das Treibmittellagervolumen (9) zu leiten.

12. Spender nach Anspruch nach einem der vorhergehenden Ansprüche,
**dadurch gekennzeichnet, dass** das Treibmittellagervolumen (9) ein dem Vorratsbehältnis (1) zugewandten Deckelabschnitt (39) aufweist.

13. Spender nach einem der vorhergehenden Ansprüche, **dadurch gekennzeichnet**, die Pumpvorrichtung (3) eine vertikale um eine Spenderachse (a) umlaufende Führungswand (38) zur vertikalen Führung des Vorratsbehältnisses (1) aufweist.

14. Spender Anspruch 12 und Anspruch 13, **dadurch gekennzeichnet, dass** der Deckelabschnitt (39) in einem von der umlaufenden Führungswand (38) umgebenden Bereich wenigstens eine Durchgangsöffnung (40) aufweist, durch welche aus dem Volumen (7) austretendes Treibmittel (T) in das Treibmittellagervolumen (9) gelangt.

15. Spender zur portionierten Ausgabe flüssiger bis pastöser Massen (M) mit einem Vorratsbehältnis (1) und einer oben am Vorratsbehältnis (1) angeordneten Ausgabeöffnung (2) zum Ausbringen der Masse (M), und mit einer Pumpvorrichtung (3), die mit einem innerhalb des Vorratsbehältnisses (1) angeordneten Kolben (4) zusammenwirkt, der bei einer Pumpbetätigung der Pumpvorrichtung (3) an einer Innenmantelfläche (5) des Vorratsbehältnisses (1) von unten nach oben verlagerbar ist, wobei ein die Pumpvorrichtung (3) und ein Reservoir (8) aufweisender Pumpenkörper (6) unterhalb des Kolbens (4) angeordnet ist, **dadurch gekennzeichnet, dass** das Reservoir (8) ein Treibmittellagervolumen (9) ausbildet, in dem das insbesondere flüssige Treibmittel (T) gelagert werden kann, und dass die Pumpvorrichtung (3), insbesondere das Reservoir (8), eine Auffangeinrichtung (37) für aus dem Volumen (7) austretendes Treibmittel (T) aufweist.
